Europäisches Patentamt

European Patent Office

Office européen des brevets

(19)

(11) **EP 0 880 406 B1**

(12) **FASCICULE DE BREVET EUROPEEN**

(45) Date de publication et mention
de la délivrance du brevet:
**08.03.2000  Bulletin 2000/10**

(51) Int Cl.[7]: **B01J 27/224**, B01J 27/22,
B01J 23/10

(21) Numéro de dépôt: **97901667.2**

(22) Date de dépôt: **24.01.1997**

(86) Numéro de dépôt international:
**PCT/FR97/00143**

(87) Numéro de publication internationale:
**WO 97/26988 (31.07.1997 Gazette 1997/33)**

(54) **SUPPORTS DE CATALYSEUR EN MOUSSE DE SiC REVETUE D'OXYDE METALLIQUE ET SYSTEMES CATALYTIQUES CORRESPONDANTS**

KATALYSATORTRÄGERN AUS SILIZIUMCARBIDSCHAUMSTOFF BESCHICHTETE MIT METALLOXID UND ENTSPRECHENDE KATALYTISCHE SYSTEMEN

METAL OXIDE-COATED SiC FOAM CARRIERS FOR CATALYSTS, AND CATALYTIC SYSTEMS THEREFOR

(84) Etats contractants désignés:
**BE DE DK ES FI FR GB IT NL SE**

(30) Priorité:  **26.01.1996  FR 9601181**

(43) Date de publication de la demande:
**02.12.1998  Bulletin 1998/49**

(73) Titulaire: **PECHINEY RECHERCHE (Groupement d'Intérêt Economique géré par l'ordonnance du 23 Septembre 1967)**
**92400 Courbevoie (FR)**

(72) Inventeurs:
• **PRIN, Marie**
**38500 Saint Cassien (FR)**

• **HERVIEU, Pascal**
**38140 Beaucroissant (FR)**

(74) Mandataire: **Mougeot, Jean-Claude et al**
**PECHINEY**
**Immeuble "SIS"**
**217 ,cours Lafayette**
**69451 Lyon Cedex 06 (FR)**

(56) Documents cités:
**EP-A- 0 313 480          EP-A- 0 399 891**
**EP-A- 0 543 752          GB-A- 2 163 364**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 880 406 B1

**Description**

**DOMAINE DE L'INVENTION**

L'invention concerne le domaine des catalyseurs et en particulier le domaine des supports de catalyseur à surface spécifique élevée, et plus spécialement celui des supports en carbure de silicium SiC.

**ETAT DE LA TECHNIQUE**

On connaît déjà, notamment par la demande française FR-A1-2 705 340, la fabrication de mousses de SiC destinées notamment à la fabrication de supports de catalyseurs pour le traitement des gaz d'échappement.

On connaît également par le document GB 2163364-A un corps poreux de SiC infiltré par du métal liquide catalytique qui peut être activé par oxydation, l'oxyde catalytique se trouvant enchâssé dans le corps poreux. La température de traitement utilisée est typiquement, d'après les exemples, de plus de 1800°C.

On connaît également par le document EP 0313480-A la préparation d'un carbure de Si à surface spécifique élevée, par réaction de SiO gazeux sur un carbone réactif, typiquement pastilles de graphite (obtenues par agglomération de poudre) ou, comme cela est exemplifié, de poudre de charbon actif, à une température d'au plus 1400°C (exemplifiée : 1250°C). Le carbone peut être dopé par un sel d'uranium ou de cérium avant de le soumettre à la réaction de carburation.

Par ailleurs, les pots catalytiques usuels pour moteurs à combustion interne sont connus pour être formés à partir d'un support de céramique, typiquement en cordiérite dense et compacte. Ce support est ensuite traité de manière à former un dépôt d'alumine adhérant au support en cordiérite, connu sous le vocable anglosaxon de «wash coat». Une phase catalytique active est déposée sur la couche d'alumine, phase active qui peut être constituée d'un oxyde de cérium, en particulier la cérine (CeO$_2$), puis de platine et de rhodium.

**PROBLEME POSE**

L'industrie automobile recherche en particulier des systèmes catalytiques pour pots d'échappement plus efficaces et moins coûteux de manière à pouvoir satisfaire à la fois les exigences et les réglementations toujours plus sévères relatives à dépollution des gaz d'échappement des moteurs à explosion, et des exigences d'ordre économique évidentes.

Le problème est donc de mettre au point une génération nouvelle de système catalytique en partant d'une mousse de SiC telle que décrite dans la demande FR-A1-2 705 340, système catalytique présentant à la fois de meilleures performances techniques et un avantage économique.

**OBJETS DE L'INVENTION**

Un premier objet de l'invention est constitué par un support de catalyseur à base de mousse de SiC. Un second objet de l'invention est constitué par un procédé de fabrication dudit support.
Un troisième objet est constitué par le système catalytique correspondant. Un quatrième objet de l'invention est un procédé de fabrication dudit système catalytique.

**DESCRIPTION DE L'INVENTION**

Selon un premier objet de l'invention, le support de catalyseur comprend un matériau en SiC à l'état divisé et poreux et est caractérisé en ce que ledit matériau comprend une couche superficielle d'oxyde donneur d'oxygène.

De préférence, ledit matériau à base de SiC à l'état divisé est une pièce de forme en mousse de SiC, ayant une surface spécifique d'au moins 5 m$^2$/g, telle que celle décrite dans la demande française FR-A1-2 705 340 déjà citée. L'état divisé du SiC constituant la mousse contribue à ce que ladite mousse ait une surface spécifique élevée; cet état divisé est de plus essentiel pour obtenir l'accrochage de la couche superficielle d'oxyde donneur d'oxygène.

On appelle oxyde donneur d'oxygène un oxyde métallique présentant un écart (t) par rapport à la stoéchiométrie des formules globales desdits oxydes. En d'autres termes un oxyde ayant une formule globale MxOy peut donner des oxydes de formule Mx O$_{y-t}$ Son rôle va donc être de réguler le potentiel d'oxygène lors des réactions catalytiques.

L'oxyde donneur d'oxygène comprend généralement les oxydes de métaux ayant au moins deux degrés d'oxydation mais qui restent sous forme d'oxydes et ne se carburent pas lors des réactions catalysées se produisant dans le pot catalytique selon la présente invention.
Ces oxydes sont généralement ceux des métaux de la colonne 3 de la classification périodique des éléments, c'est-à-dire Sc, Y, les lanthanides et les actinides, de préférence les oxydes des terres rares et plus particulièrement du cérium, comme la cérine Ce O$_2$, ou les oxydes de mélange de terres rares comme le misch métal. Mais ces oxydes peuvent également être ceux des métaux appartenant à la fois aux colonnes 7, 8, 9, 10 11 et aux lignes 5 et 6, par exemple les oxydes du Pt, Rh, Pd, qui seront désignés par la suite sous le vocable de «métaux dits précieux».

La demanderesse a trouvé que, de manière surprenante, le dépôt d'une couche superficielle d'oxyde donneur d'oxygène, en particulier de cérium, permet d'obtenir simultanément les effets suivants :

- une adhérence élevée de cette couche directement sur le matériau support en SiC à l'état divisé,
- une forte augmentation de la surface spécifique,

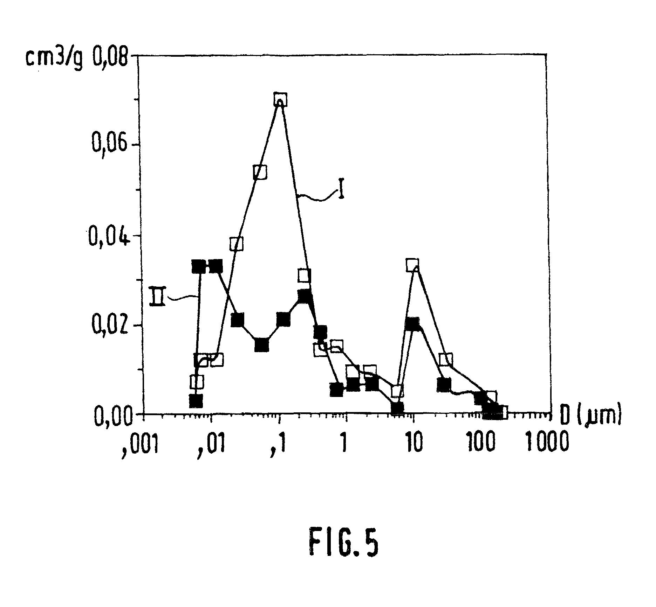

- une adhérence élevée du dépôt ultérieur de la phase catalytique active. Cette bonne adhérence peut se déduire de mesures de porosité au mercure (voir figure 5 dans le cas de la cérine) qui montrent que l'oxyde (la cérine) se dépose dans toutes les porosités du support SiC de haute surface spécifique, avec une épaisseur de l'ordre de quelques centièmes de µm. En effet, comme le montre la figure 5, le support de mousse de SiC présente deux gammes de porosité : des macropores de 10 à 100 µm, et des mésopores de 0,007 à 0,1 µm. L'ajout de cérine ne modifie pas les macropores. Par contre, du fait du dépôt de cérine à l'épaisseur indiquée, les mésopores de dimensions initialement comprises entre 0,04 et 0,1 µm voient leurs dimensions réduites à 0,007-0,02 µm.

Ainsi le support SiC à l'état divisé, exempt de «wash coat», apporte la surface spécifique et entraine l'adhérence élevée de la phase catalytique, ce qui permet d'avoir une activité catalytique élevée et stable en cours d'utilisation, la couche d'oxyde ne subissant pas d'altération.

En comparaison, il a été observé que l'imprégnation des supports du commerce en cordiérite bien connus, sans dépôt préalable d'un «wash coat» à base d'alumine, conduit à la formation d'amas de 200 à 700 µm d'oxyde de cérium, qui ne permettent donc pas une dispersion efficace de la phase catalytique active; c'est pourquoi dans ce cas la confection préalable d'un «wash coat» à base d'alumine est indispensable pour fournir la surface spécifique et l'adhérence de la phase catalytique.

Il a aussi été observé que l'imprégnation de mousses de SiC du commerce, à faible surface spécifique (< 2 m$^2$/g) ne permet pas de fixer plus de 3% en poids de cérine sur ce support, ce qui interdit une bonne activité catalytique.

Il a été observé en particulier, et cela apparaît sur la figure 5, qu' avec un support SiC en l'absence d'une couche superficielle d'oxyde donneur d'oxygène, la surface spécifique était très inférieure à ce qu'elle est en présence d'une telle couche. En outre, il a été observé que la présence de ladite couche superficielle d'oxyde donneur d'oxygène permettait seule de disperser efficacement une phase catalytique active dans un état bien divisé, sans formation de gros agglomérats à faible activité catalytique.

Selon l'invention, le rapport oxyde donneur d'oxygène/ SiC (en particulier dans le cas du cérium) est en général compris entre 10 et 50 % en poids par rapport au SiC, de préférence 20 à 40%, pour les métaux les plus courants évoqués ci-dessus . En effet, il a été observé une baisse de l'activité catalytique pour une teneur en oxyde inférieure à 10% en poids, et un bouchage des pores du support en mousse de SiC pour une teneur supérieure à 50% en poids.

Ce rapport peut descendre à 1 % pour certains oxydes, en particulier parmi ceux du groupe des métaux dits précieux.

Selon l'invention, la couche superficielle d'oxyde donneur d'oxygène peut comprendre un agent de stabilisation dudit oxyde, destiné à éviter le risque de frittage, à une teneur relative par rapport audit oxyde comprise entre 0,1 et 5 % en poids.

Cet agent de stabilisation peut être choisi parmi les éléments Si, Al, Mg, Ca, Zr, La, et/ou leurs oxydes : silice, alumine, magnésie, chaux, zircone, et oxyde de lanthane.

Comme déjà mentionné, il a été observé que la présence d'une couche superficielle d'oxyde donneur d'oxygène selon l'invention conduisait à une forte augmentation de la surface spécifique dudit support selon l'invention. Ainsi, la surface spécifique dudit support final selon l'invention est généralement comprise entre 1,5 et 4 fois celle dudit matériau en SiC à l'état divisé de départ.

Cette surface spécifique est en relation avec le spectre de pores du support, comme représenté par exemple à la figure 5 (courbe II) dans le cas de la cérine : ce spectre de pores, bimodal, présente une plage de macroporosité allant de 5 à 100 µm, et une plage de mésoporosité allant de 0,007 à 0,5 µm. D'autres spectres, éventuellement décalés vers les faibles dimensions peuvent être obtenus en partant d'un support SiC plus fin.

Le deuxième objet de l'invention est constitué par un procédé de fabrication du support selon l'invention, dans lequel :

a) on prépare une solution d'un précurseur d'oxyde donneur d'oxygène,
b) on imprègne ledit matériau en SiC à l'état divisé avec ladite solution,
c) on sépare l'excès de ladite solution,
d) on calcine ledit matériau imprégné à une température au moins égale à la température de décomposition dudit précurseur, mais inférieure à celle de frittage dudit oxyde, de manière à former une couche dudit oxyde sur ledit matériau en SiC à l'état divisé.

De préférence, ladite solution est une solution aqueuse et de préférence un nitrate. Dans le cas du cérium, le précurseur est un sel de cérium, de préférence céreux, soluble dans l'eau, au degré d'oxydation +III, de préférence un nitrate céreux; la calcination conduit alors à la cérine.

A l'étape c) dudit procédé, on sépare avantageusement l'excès de ladite solution par centrifugation. Généralement, les étapes a), b) et c) dudit procédé sont effectuées à température régulée, la température étant comprise entre 15 et 70°C.

Pour faire varier le rapport oxyde donneur d'oxygène/SiC, à l'étape a) du procédé, on ajuste la concentration de ladite solution en précurseur d'oxyde de préférence entre 20% en poids et la limite de solubilité dudit précurseur dans ladite solution, et/ou, à l'étape c) du procédé, ledit excès est séparé en plus ou moins grande quantité.

Un troisième objet de l'invention est constitué par un système catalytique comprenant une phase catalytique active déposée sur le support de catalyseur selon l'invention.

Ladite phase catalytique active comprend habituellement un métal ou un mélange de métaux précieux comme le platine, et/ou le palladium, et le rhodium, de manière à former un système catalytique pour pots d'échappement; mais elle peut contenir d'autres éléments actifs en catalyse. Dans le cas du platine/rhodium, la teneur pondérale en platine dudit système catalytique est comprise entre 0,05 et 3% par rapport au poids du système catalytique, et sa teneur pondérale en rhodium est comprise entre 0,01 et 3%.

Un quatrième objet de l'invention est constitué par un procédé de fabrication dudit système catalytique selon l'invention comprenant les étapes suivantes :

1) on dépose sur ledit support catalytique ladite phase active comprenant, par exemple, du platine et du rhodium, par toute méthode connue en elle-même, à partir d'une solution de précurseurs.

2) on sépare dudit support catalytique l'excès de ladite solution, de préférence par essorage.

3) on traite thermiquement ledit support catalytique sur lequel a été déposé ladite solution de précurseurs, à une température supérieure à la température de décomposition desdits précurseurs de platine et rhodium, de manière à former ladite phase catalytique.

Lesdites solutions de précurseurs de platine sont, de préférence, des solutions d'acide chloroplatinique $H_2PtCl_o$ ou de platine II amine $Pt(NH_3)_2Cl_2$, et dans lequel les solutions de précurseurs de rhodium sont des solutions d'un sel de rhodium au degré d'oxydation +III choisi parmi les chlorures, nitrates et sulfates.

La concentration en platine dans ladite solution de précurseurs est comprise entre 20 mg/l et 60g/l, et la concentration en rhodium dans ladite solution de précurseurs est comprise entre 20 mg/l et 60 g/l. En général le rapport Pt/Rh (pondéral) à de la phase active déposée sur le support se situe entre 3 et 6.

De façon inattendue, il a été trouvé qu'une meilleure dispersion de la phase catalytique métallique est obtenue quand ledit dépôt est effectué sur le support catalytique par adsorption des éléments actifs, par exemple platine et rhodium, sous forme d'espèces anioniques ou cationiques en solution ; pour cela la surface dudit support aura été préalablement chargée respectivement positivement ou négativement en choisissant un pH de ladite solution inférieur ou supérieur au point isoélectrique dudit oxyde donneur d'oxygène hydraté. Le point isoélectrique est par définition le pH correspondant à l'absence de charge de surface sur l'oxyde donneur d'oxygène hydraté en solution.

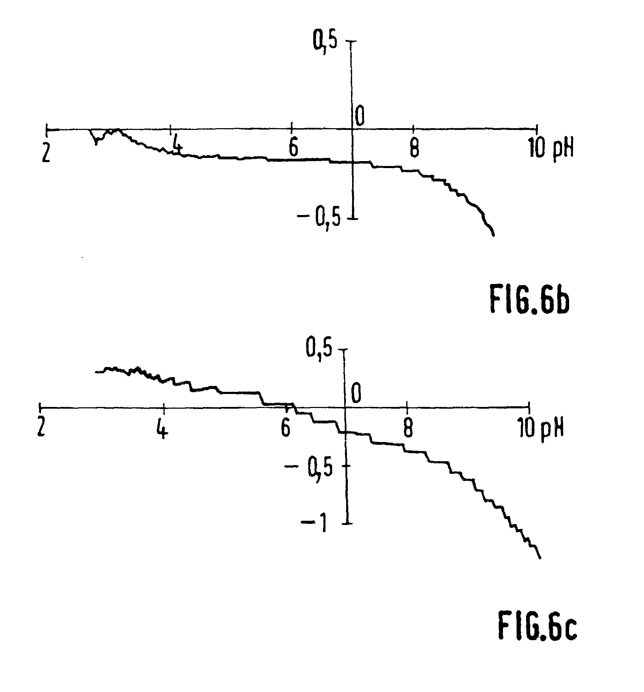

Comme représenté aux figures 6b et 6c dans le cas du cérium, où est représentée la charge de surface en fonction du pH, il est clair que, contrairement au cas d'un simple support en SiC, un support en SiC, traité selon l'invention par dépôt de cérine, conduit (voir figure 6c) à un support dont le point isoélectrique est voisin de 6, de sorte qu'il est loisible de choisir un ou l'autre dedites espèces anioniques ou cationiques adsorbées contenant le métal précieux, alors que le simple support en SiC, avec un point isoélectrique de l'ordre de 2, présente une latitude de choix bien moindre.

Pour faire varier ladite teneur pondérale en élément actif, de préférence en platine et/ou en rhodium, on modifie les concentrations desdits précurseurs d'éléments actifs (platine et/ou rhodium) dans les solutions de ces précurseurs, et/ou, à l'étape 2) dudit procédé, on sépare ledit excès en plus ou moins grande quantité.

**DESCRIPTION DES FIGURES**

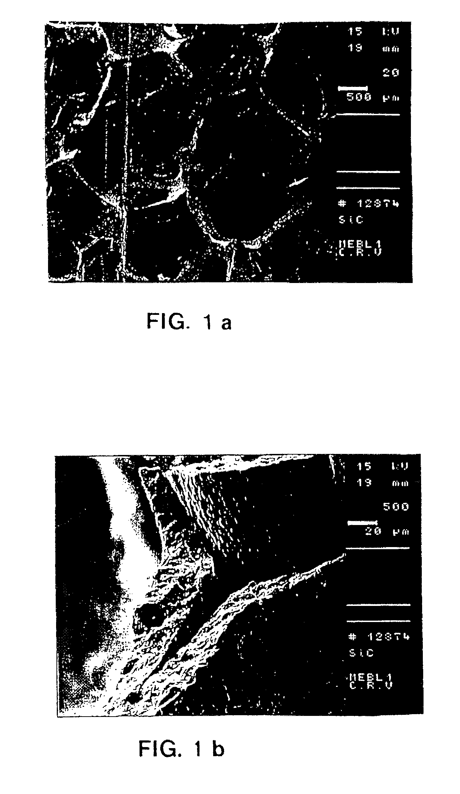

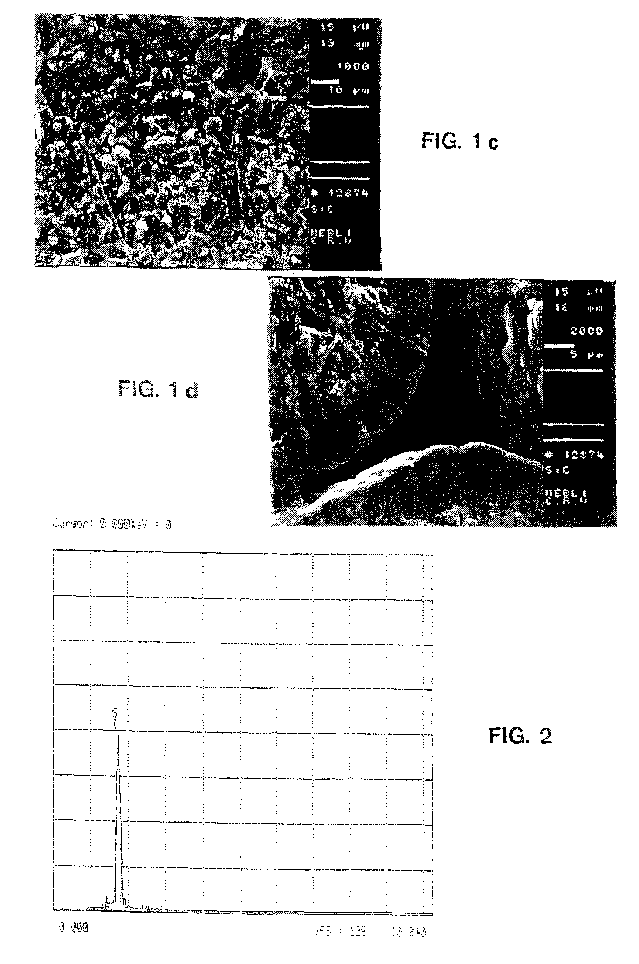

Les figures 1a à 1d sont des photographies du matériau en SiC utilisé dans les exemples, l'échelle figurant sur la partie droite étant de 500 µm pour la figure 1a, de 20 µm pour la figure 1b, de 10 µm pour la figure 1c et de 5 µm pour la figure 1d.

A noter que la figure 1 c est relative à une partie «plane», alors que la figure 1d est relative à un raccordement de surfaces «planes» ou «cylindriques», comme on peut l'observer par grossissement de la figure 1b.

La figure 2 est un enregistrement du spectre de fluorescence X montrant le pic correspondant à l'élément Si.

Les autres figures sont relatives au support de catalyseur selon l'invention dans le cas de la cérine :

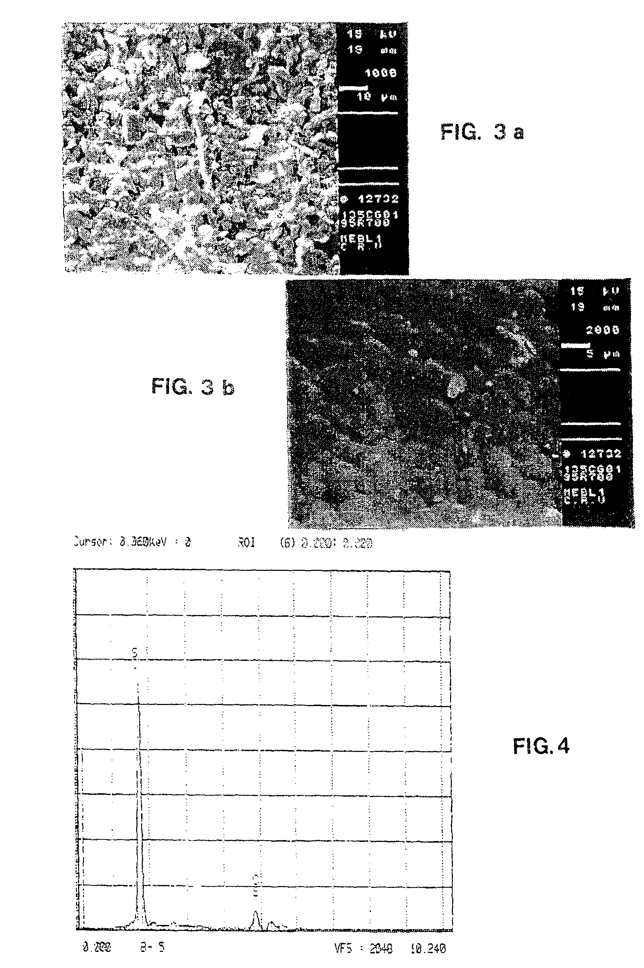

les figures 3a et 3b sont analogues aux figures 1 c et 1 d.

la figure 4 est un enregistrement de fluorescence X montrant la présence d'un pic correspondant à l'élément Si et d'un pic de moindre hauteur correspondant à l'élément Ce.

La figure 5 est un spectre de pores, avec en abscisse le diamètre de pores en µm, et en ordonnée le volume poreux en $cm^3/g$ :

- la courbe I, en points clairs, ayant les pics les plus élevés, est relative au support de SiC avant dépôt de la couche d'oxyde donneur d'oxygène
- la courbe II, en points foncés, est relative au même support, recouvert de cérine selon les exemples de l'invention; elle présente une distribution ayant des pores de taille très petite, notamment autour de 0,01 µm, qui est génératrice d'une surface spécifique très élevée.

Les figures 6b et 6c sont des courbes indiquant la charge de surface (en ordonnée - avec des unités arbitraires) en fonction du pH (en abscisse). La figure 6b est relative à un support en SiC, et la figure 6c à un support en SiC traité selon l'invention avec dépôt de cérine.

## AVANTAGES DE L'INVENTION

Si l'on compare la présente invention à la technique la plus proche et la plus performante disponible actuellement qui est constituée par les supports en cordiérite recouverts d'une couche d'alumine sur laquelle est déposée une couche de cérine et une phase catalytique active, et les systèmes catalytiques correspondants, en particulier ceux comprenant du Pt-Rh, on a observé en faveur de l'invention les principaux avantages suivants :

- du fait que le support selon l'invention ne comprend pas d'alumine (wash coat), qui est bien connu pour être l'objet d'un frittage progressif aux températures d'utilisation du pot catalytique, ce qui diminue son efficacité, ledit support selon l'invention assure une durée de vie du système catalytique beaucoup plus grande due à l'absence de frittage, en particulier dans le cas de la cérine ;

- grâce à l'hydrodynamique du support particulièrement favorable à la catalyse des réactions de dépollution, le système catalytique selon l'invention, comprenant par exemple Pt-Rh et destiné au traitement des gaz d'échappement, présente, à activité catalytique égale, un volume 30 % moindre que le système catalytique de l'état de la technique à support de cordiérite, ce qui est particulièrement avantageux sur le plan du rapport qualité/prix ;

- enfin, il a été observé d'une manière surprenante et fondamentale en vue du recyclage des matériaux que la récupération des métaux précieux, tels que Pt-Rh, peut se faire de façon à la fois simple, économique et particulièrement efficace.

En effet, et c'est une caractéristique de l'invention, ledit dépôt de métal actif sur le support est récupérable à l'aide d'une simple lixiviation par mise en contact du système catalytique selon l'invention avec une solution acide chaude concentrée (HCl, $HNO_3$,...). Cette opération permet, typiquement en moins d'une journée, de récupérer la quasi-totalité des métaux précieux, c'est-à-dire au moins 98%. La solution obtenue est, de plus, facilement recyclable pour réaliser un nouveau dépôt du fait de la bonne pureté des métaux précieux qu'il contient. En comparaison, avec un système catalytique selon l'état de la technique à base de cordiérite comportant un «wash-coat» à base d'alumine, il est nécessaire d'effectuer une mise en solution complète du support de cordiérite du fait de la formation d'espèces très stables de Pt et Rh, et en particulier de Rh, avec l'alumine, formation favorisée par le frittage progressif de l'alumine, d'où une consommation accrue de réactif. De plus la présence du «wash coat» sur la cordiérite provoque d'importantes difficultés de filtrations pour le recyclage des métaux précieux.

## EXEMPLES DE REALISATION

EXEMPLE 1

Un système catalytique complet a été fabriqué à partir d'un bloc de mousse de SiC, ayant un volume de 1,4 l, mousse élaborée conformément à l'exemple 5 (test 4) du brevet FR-A1-2 705 340. Cette mousse de SiC a une surface spécifique de 14,2 $m^2$/g et une répartition poreuse (spectre de pores) comme indiqué à la figure 5 (courbe I).

Etape d'imprégnation de cérine :

Le bloc de SiC a été immergé dans deux litres d'une solution aqueuse à 55 % en poids de nitrate céreux hexahydraté ($Ce(NO_3)_{36}H_2O$). L'ensemble a été maintenu immergé et dégazé sous vide partiel pendant 10 minutes. Le bloc a été alors séparé de la solution, égouttée et essorée par centrifugation. Le poids du bloc humide imprégné de sel céreux était alors de 263 g. Ce sel déposé a été décomposé thermiquement en chauffant progressivement le bloc imprégné jusqu'à 450°C et en maintenant à cette température pendant 3 heures. A la fin de cette étape, on a obtenu un support de catalyseur composé d'une mousse de SiC avec une couche de cérine représentant 18,6 % du poids total du support final. Sa surface spécifique est de 24,5 $m^2$/g - soit 1,72 fois la surface spécifique du support de départ. Son spectre de pores correspond à la courbe II de la figure 5, et présente un maximum dans la zone de 0,007 μm-0,01 μm.

Etape d'imprégnation de métaux de la phase active:

Le support catalytique obtenu précédemment (mousse de SiC et cérine) a été ensuite immergé dans deux litres d'une solution aqueuse contenant 16,6 g/l de platine sous forme d'acide chloroplatinique et 4,2 g/l de rhodium sous forme de nitrate de Rh. L'ensemble a été dégazé sous vide partiel et maintenu immergé pendant dix minutes. Le support a alors été séparé de la solution, égoutté et essoré par centrifugation. Le poids du support imprégné, humide, était alors de 251 g. On a décomposé les sels de platine et de rhodium par traitement thermique, avec une montée progressive en température jusqu'à 400°C et on a maintenu à cette température pendant 3 heures.
On a ainsi obtenu un système catalytique complet, constitué d'une mousse de SiC, recouverte d'une couche de cérine (18,6 % du poids total), servant de support aux métaux précieux dispersés Pt et Rh (Pt : 0,86 % du poids total, et Rh : 0,21 % du poids total),
Etape de récupération des métaux précieux.
Le système catalytique comprenant la couche de cérine et le revêtement de métaux précieux a été broyé grossièrement puis mis en contact avec un mélange de 50 % d'acide nitrique à (53 %) et de 50 % d'acide chlorhydrique à (36 %) maintenu à ébullition. De l'acide chlorhydrique à 36 % a été ajouté par fractions successives jusqu'à décomposition complète des nitrates. Après 5 heures, on a obtenu une suspension de SiC dans la solution d'acide chloroplatinique et de chlorure de Rh. Après refroidissement, filtration aisée et lavage du résidu solide, récupéré intégralement, un dosage par fluorescence X a montré que le résidu contient moins de 0,1 % de platine ; la solution (filtrat) récupérée par lixiviation contient 97 % du platine initialement déposé (ce pourcentage pouvant être augmenté en améliorant le lavage) ; les résultats obtenus avec le rhodium sont équivalents ; ladite solution est directement recyclable pour former un nouveau dépôt.

Il est à noter que dans le cas d'un support de cordiérite la récupération des métaux précieux par lixiviation à l'aide des mêmes acides a conduit à une dissolution partielle de la cordiérite et à des difficultés importantes de filtration (présence de colloïdes), dues à l'existence du «wash coat», qui n'ont pas permis de réaliser de bilan matière.

EXEMPLE 2

Cet exemple illustre le procédé d'adsorption de Pt et Rh sous forme d'espèces anioniques permettant une meilleure répartition de la phase catalytique métallique, grâce à un contrôle du pH lors de l'étape d'immersion de la mousse de SiC.

Un support catalytique composé d'une mousse de SiC et d'une couche de cérine (24,9 % en poids) a été préparé conformément à l'exemple 1, à l'étape d'imprégnation de cérine. La surface spécifique de ce support était de 27,9 $m^2$/g. Une carotte de 2,5 g a été prélevée de ce support.

Etape d'adsorption de métaux précieux :

La carotte ainsi prélevée a été immergée pendant 24 heures dans 100 ml d'une solution agitée et mise en circulation, dont les concentrations en Pt et Rh ont été fixées initialement et dont le pH a été régulé de manière à obtenir une adsorption d'espèces anioniques sur le support chargé positivement comme suit :

* concentrations initiales :

  - Pt : 0,514 g/l (sous forme d'acide chloroplatinique)
  - Rh : 0,266 g/l (sous forme de chlorure de rhodium)

* conditions de pH :

le pH est maintenu entre 3,1 et 3,5 par ajout d'ammoniaque ou d'acide nitrique.
Les courbes de charge de surface des figures 6b et 6c montrent que sur un support exempt de cérine (figure 6b), il n'est pas possible d'obtenir une surface chargée positivement pour des valeurs de pH de 3,1 à 3,5, ces conditions de pH étant nécessaires pour obtenir simultanément les espèces anioniques voulues. Par contre, le support complet de SiC avec dépôt de cérine permet dans ces conditions de pH d'obtenir ces charges positives en surface (figure 6c).

Après 24 heures, le support a été séparé de la solution, et simplement égoutté. Un dosage du Pt et Rh restant dans la solution (0,431 g/l pour Pt, 0,219 g/l pour Rh) a permis de connaître les quantitées déposées sur le support. On a ensuite décomposé thermiquement les sels déposés, par une montée progressive à 400°C suivie d'un maintien pendant trois heures à cette température.

On a ainsi fabriqué un système catalytique complet, constitué d'une mousse de SiC revêtu d'une couche de cérine (24,9 % du poids total), servant de support de métaux précieux Pt et Rh (Pt : 0,33% +/- 0,02 du poids total, et Rh : 0,19% +/- 0,01 du poids total). Le système catalytique obtenu a présenté une excellente activité catalytique, comparativement aux systèmes du commerce utilisant les mêmes métaux précieux supporté par cordiérite avec «wash coat», ainsi qu'une excellente résistance au frittage. Cette bonne activité catalytique, supérieure à celle obtenue à l'exemple 1, peut s'expliquer par une meilleure dispersion obtenue par la mise en jeu d'interactions ioniques pour le dépôt des métaux précieux. Il a été observé en outre une répartition très homogène des métaux précieux et cela malgré l'absence d'essorage, absence qui est généralement la cause d'accumulations par décantation de la phase catalytique. En outre, cette technique d'adsorption, contrairement à la technique d'imprégnation de l'exemple 1, permet l'utilisation de solutions diluées et recyclées de sels de Pt et de Rh.

Après utilisation du système catalytique, le support a été soumis à une lixiviation pour récupérer les métaux précieux déposés selon le protocole opératoire décrit dans l'exemple 1. L'analyse du lixiviat (après filtration et lavage) permet de calculer les rendements de lixiviation suivant :

$$\frac{\text{Pt recyclé}}{\text{Pt initial}} = 100 \pm 2\%$$

$$\frac{\text{Rh recyclé}}{\text{Rh initial}} = 100 \pm 2\%$$

EXEMPLE 3

Cet exemple illustre l'obtenion d'un support selon l'invention comprenant une couche mixte d'oxyde donneur d'oxygène comprenant un mélange de $CeO_2$ et de $Zr O_2$, ce dernier faisant fonction de donneur d'oxygène et d'additif de stabilisation.

Le support a été fabriqué à partir d'un bloc de mousse de SiC, ayant un volume de 1,4 l, mousse élaborée conformément à l'exemple 5 (test 4) du brevet FR-A1-2705340. Cette mousse de SiC a une surface spécifique de 12,3 m$^2$/g.

Etape d'imprégnation de cérine :

Le bloc de SiC a été immergé dans deux litres d'une solution aqueuse à 45% en poids de nitrate céreux hexahydraté Ce(NO$_3$)$_3$, 6 H$_2$O et 8% en poids de nitrate de zirconium pentahydraté Zr(NO$_3$)$_4$, 5 H$_2$O. L'ensemble a été maintenu immergé et dégazé sous vide partiel pendant 10 minutes. Le bloc a été alors séparé de la solution, égouttée et essorée par centrifugation. Le poids du bloc humide imprégné de sels était alors de 252 g. Ce sel déposé a été décomposé thermiquement en chauffant progressivement le bloc imprégné jusqu'à 550°C et en maintenant à cette température pendant 3 heures. A la fin de cette étape, on a obtenu un support de catalyseur composé d'une mousse de SiC avec une couche mixte de cérine et zircone contenant 16,4% de cérine et 2,4% de zircone exprimés par rapport au poids total du support final. Sa surface spécifique est de 23,5 m$^2$/g soit 1,91 fois la surface spécifique du support de départ.

Un tel support présente l'avantage de stabiliser la surface en cours d'utilisation. Comme précédemment dans les exemples 1 et 2 ce support peut être recouvert de phase active et traité pour la récupérer.

**Revendications**

1. Support de catalyseur comprenant une mousse de SiC à l'état divisé de surface spécifique d'au moins 5 m2/g caractérisé en ce que ladite mousse comprend une couche superficielle d'oxyde donneur d'oxygène susceptible de présenter un écart de teneur en oxygène par rapport à sa stoechiométrie.

2. Support selon la revendication 1 caractérisé en ce que l'oxyde donneur d'oxygène est un oxyde de l'un au moins des métaux de la colonne 3 de la classification des éléments, de préférence les terres rares.

3. Support selon la revendication 2 caractérisé en ce que l'oxyde donneur d'oxygène est un oxyde de cérium ou un oxyde d'un mélange de terres rares.

4. Support selon la revendication 1 caractérisé en ce que l'oxyde donneur d'oxygène est un oxyde de l'un au moins des métaux appartenant à la fois aux colonnes 7, 8, 9, 10, 1 1 et aux lignes 5 et 6, de préférence Pt, Rh, Pd.

5. Support selon les revendications 1 à 4 dans lequel le rapport oxyde donneur d'oxygène/SiC est supérieur à 1 % et de préférence compris entre 10 et 50 % en poids par rapport au support de SiC.

6. Support selon une quelconque des revendications 1 à 5 dans lequel la couche superficielle d'oxyde donneur d'oxygène comprend un agent de stabilisation dudit oxyde à une teneur relative par rapport audit oxyde donneur d'oxygène comprise entre 0,1 et 5 % en poids.

7. Support selon la revendication 6 dans lequel ledit agent de stabilisation est choisi parmi les éléments Si, Al, Mg, Ca, Zr ou La, et/ou leurs oxydes : silice alumine, magnésie, chaux, zircone et oxyde de lanthane.

8. Support selon une quelconque des revendications 1 à 7 dont la surface spécifique est comprise entre 1,5 et 4 fois celle dudit matériau en SiC à l'état divisé.

9. Support selon une quelconque des revendications 1 à 8 qui présente un spectre de pores, bimodal, ayant une plage de macroporosité allant de 5 à 100 µm, et une plage de mésoporosité allant de 0,007 à 0,5 µm

10. Procédé de fabrication du support selon une quelconque des revendications 1 à 9 dans lequel :

    a) on prépare une solution d'un précurseur d'oxyde donneur d'oxygène
    b) on imprègne ledit matériau en SiC à l'état divisé avec ladite solution,
    c) on sépare l'excès de ladite solution,
    d) on calcine ledit matériau imprégné à une température au moins égale à la température de décomposition dudit précurseur, mais inférieure à celle de frittage dudit oxyde, de manière à former une couche dudit oxyde sur ledit matériau en SiC à l'état divisé.

11. Procédé selon la revendication 10 dans lequel ladite solution est une solution aqueuse et ledit précurseur est un sel de cérium, soluble dans l'eau.

12. Procédé selon la revendication il dans lequel ledit sel de cérium est un nitrate céreux.

13. Procédé selon une quelconque des revendications 10 à 12 dans lequel on sépare l'excès de ladite solution par centrifugation.

14. Procédé selon une quelconque des revendications 11 ou 12 dans lequel, pour faire varier le rapport oxyde de cérium/SiC, à l'étape a) du procédé, on modifie la concentration en précurseur d'oxyde de cérium dans ladite solution, de préférence entre 20% en poids et la limite de solubilité dudit précurseur dans ladite solution, et/ou, à l'étape c) du procédé, ledit excès est séparé en plus ou moins grande quantité.

**15.** Système catalytique comprenant une phase catalytique active comprenant un ou des éléments actifs en catalyse, déposée sur ledit support de catalyseur de l'une quelconque des revendications 1 à 9.

**16.** Système catalytique selon la revendication 15 dans lequel ladite phase catalytique active comprend du platine et/ou du palladium, et du rhodium, de manière à former un système catalytique pour traitement des gaz d'échappement.

**17.** Système catalytique selon la revendication 16 dans lequel la teneur pondérale en platine dudit système catalytique est comprise entre 0,05 et 3%, et la teneur pondérale dudit système catalytique en rhodium est comprise entre 0,01 et 3%.

**18.** Système catalytique selon l'une quelconque des revendications 16 ou 17 caractérisé en ce que le rapport final Pt/Rh sur ledit support est compris entre 3 et 6.

**19.** Procédé de fabrication dudit système catalytique selon l'une quelconque des revendications 15 à 17 comprenant les étapes suivantes :

1) on dépose sur ledit support catalytique ladite phase active comprenant un ou des éléments actifs en catalyse, par toute méthode connue en elle-même, à partir de solutions de précurseurs,
2) on sépare dudit support catalytique l'excès de ladite solution, de préférence par essorage ou centrifugation,
3) on traite thermiquement ledit support catalytique sur lequel a été déposé ladite solution de précurseurs, à une température supérieure à la température de décomposition desdits précurseurs, de manière à former ladite phase catalytique active comprenant le ou les éléments actifs en catalyse.

**20.** Procédé selon la revendication 19 dans lequel les éléments actifs sont le platine et le rhodium et les solutions de précurseurs desdits éléments actifs sont, de préférence, des solutions d'acide chloroplatinique $H_2PtCl_6$ ou de platine II amine $Pt(NH_3)_2Cl_2$, et des solutions d'un sel de rhodium III choisi parmi les chlorures, nitrates et sulfates.

**21.** Procédé selon une quelconque des revendications 19 ou 20 dans lequel, à l'étape 1), ledit dépôt est effectué, de préférence, par adsorption des éléments actifs sous forme d'espèces anioniques ou cationiques en solution, sur ledit support catalytique dont la surface a été rendue respectivement chargée positivement ou négativement en choisissant un pH de ladite solution inférieur ou supérieur au point isolélectrique de l'hydrate dudit oxyde donneur d'oxygène.

**22.** Procédé selon une quelconque des revendications 19 à 21 dans lequel, pour faire varier ladite teneur pondérale en éléments actifs, on modifie les concentrations desdits précurseurs d'éléments actifs dans les solutions de ces précurseurs, et/ou, à l'étape 2) dudit procédé, on sépare ledit excès en plus ou moins grande quantité.

**23.** Procédé de récupération de la phase catalytique à base de métaux précieux comprise dans le système catalytique des revendications 16 à 19 ou obtenue selon le procédé des revendications 19 à 22, ou déposée sur le support des revendications 1 à 9 ou résultant du procédé des revendications 10 à 14, caractérisé en qu'on traite ledit système catalytique ou ledit support recouvert de ladite phase catalytique par broyage grossier, lixiviation à l'aide d'acide chaud concentré puis filtration, pour obtenir une solution de métaux précieux directement réutilisable.

**Patentansprüche**

**1.** Katalysatorträger, umfassend einen SiC-Schaumstoff im geteilten Zustand mit einer hohen Oberflächenkennzahl von mindestens 5 $m^2$/g, dadurch gekennzeichnet, dass der Schaumstoff eine Oberflächenschicht aus einem sauerstoffabgebenden Oxid umfasst, das einen von seiner Stöchiometrie abweichenden Sauerstoffgehalt aufweisen kann.

**2.** Träger nach Anspruch 1, dadurch gekennzeichnet, dass das sauerstoffabgebende Oxid ein Oxid mindestens eines der Metalle aus Spalte 3 des Periodensystems der Elemente ist, vorzugsweise seltene Erden.

**3.** Träger nach Anspruch 2, dadurch gekennzeichnet, dass das sauerstoffabgebende Oxid ein Cer-Oxid oder ein Oxid eines Gemischs aus seltenen Erden ist.

**4.** Träger nach Anspruch 1, dadurch gekennzeichnet, dass das sauerstoffabgebende Oxid ein Oxid mindestens eines der Metalle ist, die sowohl den Spalten 7, 8, 9, 10, 11 als auch den Zeilen 5 und 6 angehören, vorzugsweise Pt, Rh, Pd.

**5.** Träger nach Anspruch 1 bis 4, bei dem das Verhältnis sauerstoffbildendes Oxid zu SiC größer als 1 % ist und vorzugsweise im Bereich von 10 bis 50 Gew.-% bezogen auf den SiC-Träger liegt.

**6.** Träger nach einem der Ansprüche 1 bis 5, bei dem die Oberflächenschicht aus sauerstoffabgebendem Oxid ein Mittel zur Stabilisierung des Oxids enthält, dessen relativer Gehalt bezogen auf das sauerstoffabgebende Oxid im Bereich von 0,1 bis 5 Gew.-% liegt.

**7.** Träger nach Anspruch 6, bei dem das Stabilisierungsmittel unter den Elementen Si, Al, Mg, Ca, Zr oder La und/oder ihren Oxiden : Kieselerde, Tonerde, Magnesia, Kalk, Zirkonerde und Lanthanoxid gewählt ist.

**8.** Träger nach einem der Ansprüche 1 bis 7, dessen Oberflächenkennzahl 1,5 bis 4 mal höher ist als die des SiC-Werkstoffs im geteilten Zustand.

**9.** Träger nach einem der Ansprüche 1 bis 8, der ein bimodales Porenspektrum mit einem Makroporenbereich von 5 bis 100 pm und einem Mesoporenbereich von 0,007 bis 0,5 μm aufweist.

**10.** Verfahren zur Herstellung des Trägers nach einem der Ansprüche 1 bis 9, bei dem:

a) eine Lösung aus einem vorlaufenden sauerstoffabgebenden Oxid hergestellt wird,
b) der SiC-Werkstoff im geteilten Zustand mit der Lösung getränkt wird,
c) die überschüssige Lösung entfernt wird,
d) der getränkte Werkstoff bei einer Temperatur, die mindestens der Zersetzungstemperatur des Vorläufers entspricht, jedoch unter der Sintertemperatur des Oxids liegt, kalziniert wird, so dass sich auf dem SiC-Werkstoff im geteilten Zustand eine Schicht aus dem Oxid bildet.

**11.** Verfahren nach Anspruch 10, bei dem die Lösung eine wässrige Lösung und der Vorläufer ein wasserlösliches Cer-Salz ist.

**12.** Verfahren nach Anspruch 11, bei dem das Cer-Salz ein Cer(III)-Nitrat ist.

**13.** Verfahren nach einem der Ansprüche 10 bis 12, bei dem die überschüssige Lösung durch Zentrifugieren entfernt wird.

**14.** Verfahren nach einem der Ansprüche 11 oder 12, bei dem zur Veränderung des Cer-Oxid-SiC-Verhältnisses beim Verfahrensschritt a) der Anteil des vorlaufenden Cer-Oxids an der Lösung so geändert wird, dass er vorzugsweise zwischen 20 Gew.-% und der Löslichkeitsgrenze des Vorläufers in der Lösung liegt, und im Verfahrensschritt c) der Überschuss in mehr oder weniger grossen Mengen entfernt wird.

**15.** Katalytisches System, umfassend eine aktive katalytische Phase mit einem oder mehreren katalytisch aktiven Elementen, die auf den Katalysatorträger nach einem der Ansprüche 1 bis 9 abgeschieden wird.

**16.** Katalytisches System nach Anspruch 15, bei dem die aktive katalytische Phase Platin und/oder Palladium sowie Rhodium enthält, so dass sich ein katalytisches System zur Abgasbehandlung bildet.

**17.** Katalytisches System nach Anspruch 16, bei dem der Platin-Anteil an der Masse des katalytischen Systems 0,05 bis 3% und der Rhodium-Anteil an der Masse des katalytischen Systems 0,01 bis 3% beträgt.

**18.** Katalytisches System nach einem der Ansprüche 16 oder 17, dadurch gekennzeichnet, dass das Pt-Rh-Endverhältnis auf dem Träger 3 bis 6 beträgt.

**19.** Verfahren zur Herstellung des katalytischen Systems nach einem der Ansprüche 15 bis 17, mit folgenden Schritten :

1) die aktive Phase mit einem oder mehreren katalytisch aktiven Elementen wird nach einer in sich bekannten Methode ausgehend von Vorläuferlösungen auf den Katalysorträger abgeschieden,
2) die überschüssige Lösung wird vorzugsweise durch Schleudern oder Zentrifugieren vom Katalysatorträger entfernt,
3) der Katalysatorträger, auf den die Vorläuferlösung abgeschieden wurde, wird bei einer Temperatur oberhalb der Zersetzungsstemperatur der Vorläufer wärmebehandelt, wodurch die aktive katalytische Phase mit dem oder den katalytisch aktiven Elementen entsteht.

**20.** Verfahren nach Anspruch 19, bei dem die aktiven Elemente Platin und Rhodium und die Vorläuferlösungen der aktiven Elemente vorzugsweise Lösungen aus Chlorplatinsäure $H_2PtCl_6$ oder Platin(II)-aminsäure $Pt(NH_3)_2Cl_2$ und Lösungen aus einem Rhodium(III-)salz sind, das unter den Chloriden, Nitraten und Sulfaten gewählt wird.

**21.** Verfahren nach einem der Ansprüche 19 oder 20, bei dem im Verfahrensschritt 1) die Abscheidung vorzugsweise durch Adsorption der aktiven Elemente in Form von gelösten Anionen- bzw. Kationenformen auf dem Katalysatorträger erfolgt, dessen Oberfläche positiv bzw. negativ geladen wurde durch Wahl eines pH-Wertes der Lösung, der unter bzw. über dem isoelektrischen Punkt des Hydrats des sauerstoffabgebenden Oxids liegt.

**22.** Verfahren nach einem der Ansprüche 19 bis 21, bei dem zur Veränderung des Gehalts an aktiven Elementen an der Masse die Konzentrationen der vorlaufenden aktiven Elemente in den Lösungen dieser Vorläufer geändert wird und/oder im Verfahrensschritt 2) der Überschuss in mehr oder weniger grossen Mengen entfernt wird.

**23.** Verfahren zur Rückgewinnung der katalytischen Phase auf Edelmetallbasis, die in dem katalytischen System der Ansprüche 16 bis 19 enthalten ist oder nach dem Verfahren der Ansprüche 19 bis 22 erzeugt wird oder auf den Träger der Ansprüche 1 bis 9 abgeschieden wird oder sich aus dem Verfahren der Ansprüche 10 bis 14 ergibt, dadurch gekennzeichnet, dass das katalytische System oder der mit der katalytischen Phase bedeckte Träger durch Grobmahlen, Laugen mittels konzentrierter warmer Säure und dann Filtrieren behandelt wird, um eine direkt wiederverwertbare Edelmetalllösung zu erhalten.

**Claims**

**1.** Catalyst carrier comprising a SiC foam in a divided state, with a specific surface of at least 5 m$^2$/g characterized in that said foam comprises a surface layer of oxygen donating oxide capable of exhibiting a deviation in its oxygen content in relation to its stoichiometry.

**2.** Carrier according to Claim 1 characterized in that the oxygen donating oxide is an oxide of one or more metals in column 3 of the periodic table of elements preferably rare earths.

**3.** Carrier according to Claim 2, characterized in that the oxygen donating oxide is an oxide of cerium or an oxide of a mixture of rare earths.

**4.** Carrier according to Claim 1 characterized in that the oxygen donating oxide is an oxide of at least one of the metals belonging both to columns 7,8,9,10, 11 and to lines 5 and 6, preferably Pt, Rh or Pd.

**5.** Carrier according to Claims 1 to 4 in which the ratio of oxygen donating oxide/SiC is greater than 1% and preferably between 10 and 50% by weight with respect to the SiC carrier.

**6.** Carrier according to any one of Claims 1 to 5 in which the surface layer of oxygen donating oxide comprises a stabilization agent for said oxide at a content in relation to said oxygen donating oxide of between 0.1 and 5% by weight.

**7.** Carrier according to Claim 6 in which said stabilization agent is chosen from among the elements Si, Al, Mg, Ca, Zr or La and/or their oxides : silica, alumina, magnesia, lime, zirconia and lanthanum oxide.

**8.** Carrier according to any one of Claims 1 to 7, the specific surface of which is between 1.5 and 4 times that of said SiC material in a divided state.

**9.** Carrier according to any one of Claims 1 to 8 which has a bimodal pore spectrum having a macro-porosity range of from 5 to 100 μm and a micro-porosity range of from 0.007 to 0.5 μm.

**10.** Method of manufacturing the carrier according to any one of Claims 1 to 9 in which :

a) a solution of a precursor of an oxygen donating oxide is prepared
b) said SiC material in a divided state is impregnated with said solution
c) the excess of said solution is separated
d) said impregnated material is calcined at a temperature at least equal to the decomposition temperature of said precursor but less than the sintering temperature of said oxide in a way that forms a layer of said oxide on said SiC material in a divided state.

**11.** Method according to Claim 10 in which said solution is an aqueous solution and said precursor is a cerium salt soluble in water.

**12.** Method according to Claim 11 in which said cerium salt is a cerous nitrate.

**13.** Method according to any one of Claims 10 to 12 in which the excess of said solution is separated by centrifugation.

**14.** Method according to either one of Claims 11 or 12 in which in order to vary the cerium oxide/SiC ratio at step a) of the method, the concentration of cerium oxide precursor in said solution is modified between 20% by weight and the solubility limit of said precursor in said solution and/or, at step c) of the method, said excess is separated in greater or smaller quantity.

**15.** Catalytic system comprising an active catalytic phase comprising one or more catalytically active elements deposited on said catalyst carrier of any one of Claims 1 to 9.

**16.** Catalytic system according to Claim 15 in which said active catalytic phase comprises platinum and/or palladium and rhodium in such a way that a catalytic system is formed for the treatment of exhaust gases.

17. Catalytic system according to Claim 16 in which the content by weight of platinum of said catalytic system is between 0.05 and 3% and the content by weight of rhodium of said catalytic system is between 0.01 and 3%.

18. Catalytic system according to either one of Claims 16 or 17 characterized in that the final Pt/Rh ratio on said carrier is between 3 and 6.

19. Method of manufacturing said catalytic system according to any one of Claims 15 to 17 comprising the following steps :

    1) said active phase comprising one or more catalytically active elements is deposited on said catalytic carrier by any method known of itself, from solutions of precursors,
    2) the excess of said solution is separated from said catalytic carrier preferably by centrifugation
    3) said catalytic carrier on which said solution of precursors has been deposited is heat treated at a temperature greater than the decomposition temperature of said precursors in such a way that said active catalytic phase, comprising the catalytically active element or elements, is formed.

20. Method according to Claim 19 in which the active elements are platinum and rhodium and the solutions of precursors of said active elements are preferably solutions of chloroplatinic acid $H_2PtCl_6$ or platinum II amine $Pt(NH_3)_2Cl_2$ and solutions of a rhodium III salt chosen from among the chlorides, nitrates and sulfates.

21. Method according to either one of Claims 19 or 20 in which, at step 1), said deposition is carried out, preferably, by adsorption of the active elements in the form of anionic or cationic species in solution, onto said catalytic carrier the surface of which has been made respectively positively or negatively charged by choosing a pH of said solution that is less than or greater than the iso-electric point of the hydrate of said oxygen donating oxide.

22. Method according to any one of Claims 19 to 21 in which in order to vary said content by weight of active elements, the concentrations of said precursors of active elements in the solutions of these precursors is modified and/or, at step 2) of said method, said excess is separated in greater or smaller quantity.

23. Method of recovering said catalytic phase based on precious metals and included in the catalytic system of Claims 16 to 19 or obtained according to the method of Claims 19 to 22, or deposited on the carrier of Claims 1 to 9, or resulting from the method of Claims 10 to 14, characterized in that said catalytic system or said carrier coated with said catalytic phase is treated by coarse grinding, leaching with hot concentrated acid and then filtration in order to obtain a solution of precious metals that can be directly reused.

FIG. 1 a

FIG. 1 b

FIG. 1 c

FIG. 1 d

FIG. 2

FIG. 3 a

FIG. 3 b

Cursor: 0.360keV = 0          ROI     (6) 0.000: 0.020

FIG. 4

0.000     0- 5                              VFS : 2048    10.240

FIG.5

FIG.6b

FIG.6c